# EUROPEAN PATENT APPLICATION

(11) **EP 4 119 596 A1**
(43) Date of publication of application: **18.01.2023**
(21) Application number: 21767681.6
(22) Date of filing: 05.03.2021
(51) Int. Cl.: C08G 77/06, C08G 77/18, C08G 77/34

(54) **METHOD FOR PRODUCING SILICONE POLYMER**

(30) Priority: 13.03.2020 JP 2020044048
(71) Applicant: Toray Fine Chemicals Co., Ltd., Tokyo 101-0041 (JP)
(72) Inventor: KATO, Hidetoshi, Moriyama-shi, Shiga 524-0041 (JP); SEKI, Hiroyasu, Ichihara-shi, Chiba 299-0196 (JP)
(74) Representative: Kador & Partner PartG mbB
(86) International application number: PCT/JP2021/008698
(87) International publication number: WO 2021/182329

(57) **Abstract**

The present invention provides a silicone polymer production method that can achieve a significantly improved yield due to the needlessness of a rinsing step and can produce a stable a silicone polymer. The production method for a silicone polymer includes a step for preparing at least one silane compound selected from the compounds represented by the general formula (1); RₐSi(OR¹)₄₋ₐ (1) (wherein R is a hydrogen atom or a monovalent organic group, R¹ is a monovalent organic group, and a is an integer of 1 or 2) and the compounds represented by the general formula (2); Si(OR²)₄ (2) (wherein R² is a monovalent organic group), a step for hydrolyzing it with a quaternary ammonium compound in the presence of water, and a step for bringing it into contact with a cation exchange resin.

## Description

### TECHNICAL FIELD

The present invention relates to a production method for producing a stable silicone polymer with a significantly improved yield.

### BACKGROUND ART

Silicone polymers are organic-inorganic hybrid materials that combine organic and inorganic compounds at the molecular level. They have features unique to organic materials such as flexibility and processability and those unique to inorganic materials such as heat resistance, weather resistance, and chemical resistance, and accordingly, they are a prominent focus of study in recent years.

In particular, as a patterning technique for manufacturing semiconductor devices etc., it has been proposed to use a silicone polymer as a resist underlayer film in the reversed pattern formation step in which the lithography technique, etching technique, etc. are applied. It has been known that, among other silicone polymers, those containing many structures derived from tetramethoxysilane, tetraethoxysilane, or the like can work favorably when being embedded in a fine resist underlayer film pattern and show high etching resistance when removing the resist underlayer film pattern by oxygen based gas etching etc.

When a silicone polymer to be used for a resist underlayer film is produced from alkoxysilane as a raw material, an acid or a base is generally used as a catalyst. It has been known that, among other various bases, the use of a quaternary ammonium compound as catalyst serves to produce a silicone polymer that is stable and can form a film having high mechanical strength (see Patent documents 1 to 3). These properties have been considered to have relations with, for example, the fact that, unlike other acid or base catalysts, such a quaternary ammonium compound tends to form a peculiar higher order structure called the cage structure because it comes into an equilibrium state after forming an ion pair with the silanol group resulting from hydrolysis of the alkoxy group (see Patent documents 1 to 4).

On the other hand, when a silicone polymer is produced from a quaternary ammonium compound used as catalyst, it is necessary to neutralize and rinse the quaternary ammonium compound. When a film is produced by applying it to a substrate, the silicone polymer needs to contain a silanol group, which is a condensation active group, to some extent, but when a quaternary ammonium compound is used as catalyst, it does not condense when heated as it is because it forms an ion pair with the silanol group. Therefore, it is necessary to neutralize the quaternary ammonium compound with an acid and perform rinsing to remove the salt etc. formed by the neutralization.

However, a silicone polymer containing many structures derived from tetramethoxysilane, tetraethoxylane, or the like, in particular, is so high in polarity that it is easily dissolved in water, and in some cases, therefore, the silicone polymer will not be obtained properly because the aqueous layer and the oil layer are not separated by rinsing. Furthermore, even if the aqueous layer and the oil layer are separated, the silicone polymer may be removed after being transferred from the oil layer into the aqueous layer and this will result in the disadvantage that the yield of the silicone polymer becomes extremely low, making it practically impossible to use it industrially. Thus, there has been a call for a method for producing a silicone polymer containing many strictures derived from tetramethoxysilane, tetraethoxysilane, or the like with high yield by using a quaternary ammonium compound as catalyst.

### PRIOR ART DOCUMENTS

### PATENT DOCUMENTS

Patent document 1: Japanese Patent No. 4530113
Patent document 2: Japanese Patent No. 6256775
Patent document 3: Japanese Unexamined Patent Publication (Kokai) No. 2016-11411
Patent document 4: Japanese Patent No. 4409397

### SUMMARY OF INVENTION

### PROBLEMS TO BE SOLVED BY THE INVENTION

The present invention relates to a production method that serves to produce a stable silicone polymer with a significantly improved yield while using a quaternary ammonium compound as catalyst.

### MEANS OF SOLVING THE PROBLEMS

The production method for a silicone polymer according to the present invention includes a step for preparing at least one silane compound selected from the compounds represented by the general formula (1) given below

RₐSi(OR¹)₄₋ₐ (1)

(wherein R is a hydrogen atom or monovalent organic group; R¹ is a monovalent organic group; and a is an integer of 1 or 2)
and the compounds represented by the general formula (2) given below

Si(OR²)₄ (2)

(wherein R² is a monovalent organic group),
a step for hydrolyzing it with a quaternary ammonium compound in the presence of water,
and a step for bringing it into contact with a cation exchange resin.

### ADVANTAGEOUS EFFECTS OF THE INVENTION

The production method for a silicone polymer according to the present invention is designed to remove the quaternary ammonium compound by bringing the reaction solution into contact with a cation exchange resin, and therefore, it eliminates the need for neutralization with an acid and rinsing with water. Accordingly, there will be no chance that a silicone polymer is not produced because of non-separation between the aqueous layer and the oil layer or that the silicone polymer is removed after being transferred into the aqueous layer. This can ensure a high yield.

In addition, the production method for a silicone polymer according to the present invention serves to produce a polymer that can be dissolved in an organic solvent without being gelated. It will also be high in stability and will not easily suffer a change in molecular weight.

When used for coating, a silicone polymer produced by the production method for a silicone polymer according to the present invention will form a coat film having a pencil hardness of 4H or higher. A hard coat film has a high scratch resistance.

A silicone polymer composition produced by the production method for a silicone polymer according to the present invention can be applied by a common coating technique such as spin coating. Furthermore, when applied to a substrate, a silicone polymer composition produced by the production method for a silicone polymer according to the present invention can form a thin film on the substrate. By heating it, a heat-cured film can be formed on the substrate. A heat-cured film thus formed will have good properties in terms of transparency and heat resistance, and therefore, it can be used as a protective film for semiconductors, displays, etc., a resist underlayer film, and the like.

Being produced from raw materials free of metals, a silicone polymer produced by the production method for a silicone polymer according to the present invention also serves suitably as electronic information materials such as those for displays and semiconductors.

Furthermore, a silicone polymer produced by the production method for a silicone polymer according to the present invention can be applied not only to the field of electronic information materials but also to a wide range of other fields such as paints and adhesives.

### DESCRIPTION OF PREFERRED EMBODIMENTS

The production method for a silicone polymer according to the present invention comprises a step for preparing at least one silane compound selected from the compounds represented by the general formula (1) given above

RₐSi(OR¹)₄₋ₐ (1)

(wherein R is a hydrogen atom or monovalent organic group; R¹ is a monovalent organic group; and a is an integer of 1 or 2)
and the compounds represented by the general formula (2) given above

Si(OR²)₄ (2)

(wherein R² is a monovalent organic group),
a step for hydrolyzing it with a quaternary ammonium compound in the presence of water, and a step for bringing it into contact with a cation exchange resin.

When R is a monovalent organic group in the general formula (1) given above, R and R¹ are independent of each other and may be either the same organic group or different organic groups. When a is 2, furthermore, the two R's are independent of each other and may be either the same monovalent organic group or two different monovalent organic groups. In addition, the two or more R¹'s are independent of each other and may be either the same monovalent organic group or two or more different monovalent organic groups. For the compounds represented by the general formula (2), examples of the monovalent organic groups of R and R¹ include an alkyl group, aryl group, vinyl group, allyl group, and glycidyl group. In the general formula (1), furthermore, R is preferably a monovalent organic group, an alkyl group or an aryl group in particular.

Here, examples of the alkyl group include a methyl group, ethyl group, propyl group, butyl group, and pentyl group, It is preferably an alkyl group having 1 to 5 carbon atoms. Such an alkyl group may be either linear or branched and hydrogen atoms therein may be substituted by fluorine atoms, etc.

Examples of the aryl group include a phenyl group, naphthyl group, methylphenyl group, ethylphenyl group, chlorophenyl group, bromophenyl group, and fluorophenyl group.

Specific examples of a compound as represented by the general formula (1) include methyl trimethoxysilane, methyl triethoxysilane, methyl tri-n-propoxysilane, methyl tri-iso-propoxysilane, methyl tri-n-butoxysilane, methyl tri-sec-butoxysilane, methyl tri-tert-butoxysilane, methyl triphenoxysilane, ethyl trimethoxysilane, ethyl triethoxysilane, ethyl tri-n-propoxysilane, ethyl tri-iso-propoxysilane, ethyl tri-n-butoxysilane, ethyl tri-sec-butoxysilane, ethyl tri-tert-butoxysilane, ethyl triphenoxysilane, vinyl trimethoxysilane, vinyl triethoxysilane, vinyl tri-n-propoxysilane, vinyl tri-iso-propoxysilane, vinyl tri-n-butoxysilane, vinyl tri-sec-butoxysilane, vinyl tri-tert-butoxysilane, vinyl triphenoxysilane, n-propyl trimethoxysilane, n-propyl triethoxysilane, n-propyl tri-n-propoxysilane, n-propyl tri-iso-propoxysilane, n-propyl tri-n-butoxysilane, n-propyl tri-sec-butoxysilane, n-propyl tri-tert-butoxysilane, n-propyl triphenoxysilane, i-propyl trimethoxysilane, i-propyl triethoxysilane, i-propyl tri-n-propoxysilane, i-propyl tri-iso-propoxysilane, i-propyl tri-n-butoxysilane, i-propyl tri-sec-butoxysilane, i-propyl tri-tert-butoxysilane, i-propyl triphenoxysilane, n-butyl trimethoxysilane, n-butyl triethoxysilane, n-butyl tri-n-propoxysilane, n-butyl tri-iso-propoxysilane, n-butyl tri-n-butoxysilane, n-butyl tri-sec-butoxysilane, n-butyl tri-tert-butoxysilane, n-butyl triphenoxysilane, sec-butyl trimethoxysilane, sec-butyl triethoxysilane, sec-butyl tri-n-propoxysilane, sec-butyl tri-iso-propoxysilane, sec-butyl tri-n-butoxysilane, sec-butyl tri-sec-butoxysilane, sec-butyl tri-tert-butoxysilane, sec-butyl-triphenoxysilane, t-butyl trimethoxysilane, t-butyl triethoxysilane, t-butyl tri-n-propoxysilane, t-butyl tri-iso-propoxysilane, t-butyl tri-n-butoxysilane, t-butyl tri-sec-butoxysilane, t-butyl tri-tert-butoxysilane, t-butyl triphenoxysilane, phenyl trimethoxysilane, phenyl triethoxysilane, phenyl tri-n-propoxysilane, phenyl tri-iso-propoxysilane, phenyl tri-n-butoxysilane, phenyl tri-sec-butoxysilane, phenyl tri-tert-butoxysilane, phenyl triphenoxysilane, γ-aminopropyl trimethoxysilane, γ-aminopropyl triethoxysilane, γ-glycidoxy propyl trimethoxysilane, γ-glycidoxy propyl triethoxysilane, γ-trifluoropropyl trimethoxysilane, γ-trifluoropropyl triethoxysilane, dimethyl dimethoxysilane, dimethyl diethoxysilane, dimethyl-di-n-propoxysilane, dimethyl-di-iso-propoxysilane, dimethyl-di-n-butoxysilane, dimethyl-di-sec-butoxysilane, dimethyl-di-tert-butoxysilane, dimethyl diphenoxysilane, diethyl dimethoxysilane, diethyl diethoxysilane, diethyl-di-n-propoxysilane, diethyl-di-iso-propoxysilane, diethyl-di-n-butoxysilane, diethyl-di-sec-butoxysilane, diethyl-di-tert-butoxysilane, diethyl diphenoxysilane, di-n-propyl dimethoxysilane, di-n-propyl diethoxysilane, di-n-propyl-di-n-propoxysilane, di-n-propyl-di-iso-propoxysilane, di-n-propyl-di-n-butoxysilane, di-n-propyl-di-sec-butoxysilane, di-n-propyl-di-tert-butoxysilane, di-n-propyl-di-phenoxysilane, di-iso-propyl dimethoxysilane, di-iso-propyl diethoxysilane, di-iso-propyl-di-n-propoxysilane, di-iso-propyl-di-iso-propoxysilane, di-iso-propyl-di-n-butoxysilane, di-iso-propyl-di-sec-butoxysilane, di-iso-propyl-di-tert-butoxysilane, di-iso-propyl-di-phenoxysilane, di-n-butyl dimethoxysilane, di-n-butyl diethoxysilane, di-n-butyl-di-n-propoxysilane, di-n-butyl-di-iso-propoxysilane, di-n-butyl-di-n-butoxysilane, di-n-butyl-di-sec-butoxysilane, di-n-butyl-di-tert-butoxysilane, di-n-butyl-di-phenoxysilane, di-sec-butyl dimethoxysilane, di-sec-butyl diethoxysilane, di-sec-butyl-di-n-propoxysilane, di-sec-butyl-di-iso-propoxysilane, di-sec-butyl-di-n-butoxysilane, di-sec-butyl-di-sec-butoxysilane, di-sec-butyl-di-tert-butoxysilane, di-sec-butyl-di-phenoxysilane, di-tert-butyl dimethoxysilane, di-tert-butyl diethoxysilane, di-tert-butyl-di-n-propoxysilane, di-tert-butyl-di-iso-propoxysilane, di-tert-butyl-di-n-butoxysilane, di-tert-butyl-di-sec-butoxysilane, di-tert-butyl-di-tert-butoxysilane, di-tert-butyl-di-phenoxysilane, diphenyl dimethoxysilane, diphenyl-di-ethoxysilane, diphenyl-di-n-propoxysilane, diphenyl-di-iso-propoxysilane, diphenyl-di-n-butoxysilane, diphenyl-di-sec-butoxysilane, diphenyl-di-tert-butoxysilane, diphenyl diphenoxysilane, divinyl trimethoxysilane.

Examples of preferred compounds as the compound (1) include methyl trimethoxysilane, methyl triethoxysilane, methyl tri-n-propoxysilane, methyl tri-iso-propoxysilane, ethyl trimethoxysilane, ethyl triethoxysilane, phenyl trimethoxysilane, phenyl triethoxysilane, dimethyl dimethoxysilane, dimethyl diethoxysilane, diethyl dimethoxysilane, diethyl diethoxysilane, diphenyl dimethoxysilane, and, diphenyl diethoxysilane, which are easily available industrially. These may be used singly or as a mixture of two or more thereof.

Examples of the monovalent organic group represented as R² in the general formula (2) include those organic groups cited as examples of R and R¹ in the general formula (1) given above. Furthermore, the four R²'s are independent of each other and may be either the same monovalent organic group or two or more different monovalent organic groups. Specific examples of compounds as represented by the general formula (2) include tetramethoxysilane, methoxytriethoxysilane, dimethoxydiethoxysilane, trimethoxyethoxysilane, tetraethoxysilane, tetra-n-propoxysilane, tetra-iso-propoxysilane, tetra-n-butoxysilane, tetra-sec-butoxysilane, tetra-tert-butoxysilane, and tetraphenoxysilane. Of these, tetramethoxysilane and tetraethoxysilane are preferred because they are easily available industrially.

For the production method for a silicone polymer according to the present invention, the compound represented by the general formula (2) preferably accounts for 50 to 100 mol%, more preferably 60 to 100 mol%, and still more preferably 70 to 100 mol%, relative to the total quantity, which accounts for 100 mol%, of the at least one silane compound selected from the compounds represented by the general formula (1) and the compounds represented by the general formula (2). It is preferable that the compound represented by the general formula (2) accounts for 50 mol% or more because it serves to produce a hard coat film.

The production method for a silicone polymer according to the present invention involves a reaction that is performed in the presence of a quaternary ammonium compound. Such a quaternary ammonium compound is preferably a quaternary ammonium compound containing a hydroxyl group.

Examples of such a quaternary ammonium compound include hydroxymethyl trimethylammonium hydroxide, 1-hydroxyethyltrimethylammonium hydroxide, 2-hydroxyethyltrimethylammonium hydroxide, 1-hydroxypropyl trimethylammonium hydroxide, 2-hydroxypropyl trimethylammonium hydroxide, 3-hydroxypropyl trimethylammonium hydroxide, hydroxymethyl triethylammonium hydroxide, 1-hydroxyethyl triethylammonium hydroxide, 2-hydroxyethyl triethylammonium hydroxide, 1-hydroxypropyl triethylammonium hydroxide, 2-hydroxypropyl triethylammonium hydroxide, 3-hydroxypropyl triethylammonium hydroxide, hydroxymethyl tripropylammonium hydroxide, 1-hydroxyethyl tripropylammonium hydroxide, 2-hydroxyethyl tripropylammonium hydroxide, 1-hydroxypropyl tripropylammonium hydroxide, 2-hydroxypropyl tripropylammonium hydroxide, 3-hydroxypropyl tripropylammonium hydroxide, hydroxymethyl tributylammonium hydroxide, 1-hydroxyethyl tributylammonium hydroxide, 2-hydroxypropyl tributylammonium hydroxide, 1-hydroxypropyl tributylammonium hydroxide, 2-hydroxypropyl tributylammonium hydroxide, 3-hydroxypropyl tributylammonium hydroxide, dihydroxymethyl dimethylammonium hydroxide, dimethyl bis(2-hydroxyethyl)ammonium hydroxide, tris-(2-hydroxyethyl) methylammonium hydroxide, tetrabutylammonium fluoride, benzyl tributylammonium chloride, benzyl triethylammonium chloride, benzyl trimethylammonium chloride, tetra-n-butylammonium chloride, tetraethylammonium chloride, tetramethylammonium chloride, benzyl tri-n-butylammonium bromide, benzyl triethylammonium bromide, benzyl trimethylammonium bromide, n-octyl trimethylammonium bromide, hexyl trimethylammonium bromide, tetrabutylammonium bromide, tetraethylammonium bromide, tetradecyl trimethylammonium bromide, tetramethylammonium bromide, tetra-n-propylammonium bromide, tetrabutylammonium iodide, tetraethylammonium iodide, tetramethylammonium iodide, tetra-n-propylammonium iodide, trimethyl phenylammonium iodide, benzyl trimethylammonium hydroxide, phenyl trimethylammonium hydroxide, tetrabutylammonium hydroxide, tetraethylammonium hydroxide, tetramethylammonium hydroxide, tetrapropylammonium hydroxide, tetrabutylammonium hydrogensulfate, tetrabutylammonium tetrafluoroborate, tetramethylammonium thiocyanate, and tetramethylammonium p-toluenesulfonate.

Of these, preferred ones include 2-hydroxyethyltrimethylammonium hydroxide, 2-hydroxytriethylammonium hydroxide, 2-hydroxymethyl tripropylammonium hydroxide, 2-hydroxymethyl tributylammonium hydroxide, dimethyl bis(2-hydroxyethyl)ammonium hydroxide, tris-(2-hydroxyethyl)methylammonium hydroxide, benzyl tributylammonium chloride, benzyl trimethylammonium chloride, tetra-n-butylammonium chloride, tetramethylammonium chloride, benzyl trin-butylammonium bromide, benzyl trimethylammonium bromide, hexyl trimethylammonium bromide, tetrabutylammonium bromide, tetradecyl trimethylammonium bromide, tetramethylammonium bromide, benzyl trimethylammonium hydroxide, phenyl trimethylammonium hydroxide, tetrabutylammonium hydroxide, tetraethylammonium hydroxide, tetramethylammonium hydroxide, tetrapropylammonium hydroxide, tetrabutylammonium hydrogensulfate, tetrabutylammonium tetrafluoroborate, tetramethylammonium thiocyanate, tetramethylammonium p-toluenesulfonate, of which tetramethylammonium hydroxide, 2-hydroxyethyltrimethylammonium hydroxide, dimethyl bis(2-hydroxyethyl)ammonium hydroxide, and tris-(2-hydroxyethyl)methylammonium hydroxide are particularly preferred. Tetramethylammonium hydroxide is low in price and its reaction can be controlled easily, and 2-hydroxyethyltrimethylammonium hydroxide, dimethyl bis(2-hydroxyethyl)ammonium hydroxide, and tris-(2-hydroxyethyl)methylammonium hydroxide are commonly produced from metal-free raw materials, that is, produced through addition reactions of trimethyl amine, dimethyl amine, or methyl amine with ethylene oxide. Thus, low metal content industrial grades of 2-hydroxyethyltrimethylammonium hydroxide, dimethyl bis(2-hydroxyethyl) ammonium hydroxide, and tris-(2-hydroxyethyl) methylammonium hydroxide are preferred because they are easily available.

The quaternary ammonium compound in use preferably accounts for 0.002 to 2 moles, more preferably 0.005 to 1.0 mole, relative to the total quantity, i.e. 1 mole, of the alkoxyl group contained in the at least one silane compound selected from the compounds represented by the general formula (1) and the compounds represented by the general formula (2). It is preferable that the quaternary ammonium compound in use accounts for 0.002 to 2 moles because a silicone polymer soluble solvents can be produced.

It is preferable that the mass based metal content in the quaternary ammonium compound is preferably 5 ppm or less, more preferably 1 ppm or less, and still more preferably 500 ppb or less. If the metal content in the quaternary ammonium compound is 5 ppm or less, it serves to provide electronic information materials such as those for displays and semiconductors.

From the viewpoint of workability, the quaternary ammonium compound may be in the form of an aqueous solution in order to facilitate the addition of the compound.

For the production method for a silicone polymer according to the present invention, water is used to hydrolyze the silane compound selected from the compounds represented by the general formula (1) and the compounds represented by the general formula (2). There are no specific limitations on the type of water to use, and useful types include industrial water, city water, well water, distilled water, ion exchanged water, and ultrapure water. Only one type of water may be used or two or more types of water may be used in combination.

Among others, ion exchanged water and ultrapure water, which are high in electric resistivity, are preferred, and in particular, ultrapure water with an electric resistivity of 15 MΩ·cm or more is low in metal content and preferred.

The molar amount of the water in use is preferably 1.0 to 15.0 times, more preferably 1.0 to 10.0 times, that of the alkoxyl group contained in the at least one silane compound selected from the compounds represented by the general formula (1) and the compounds represented by the general formula (2). It is still more preferably 1.0 to 5.0 times by mole. If the molar amount of the water in use is 1.0 times by mole or more, it is preferable because the hydrolysis and polycondensation reactions can progress rapidly, whereas if it is 15.0 times or less, it is preferable because the reactions can be controlled to avoid gelation.

In the production method for a silicone polymer according to the present invention, the reaction solution is brought into contact with a cation exchange resin. The cation exchange resin to use may be either a strong acid cation exchange resin or a weak acid cation exchange resin. It may be a commonly used one, for example, a commercial hydrogen type cation exchange resin product such as Amberlyist (manufactured by Organo Corporation), Lewatit (manufactured by Lanxess K.K.), Diaion (manufactured by Mitsubishi Chemical Corporation), and Monosphere (manufactured by The Dow Chemical Company). The cation exchange resin to use is preferably a strong acid cation exchange resin.

To bring the reaction solution containing at least one silane compound selected from the compounds represented by the general formula (1) and the compounds represented by the general formula (2), a quaternary ammonium compound, and water into contact with a cation exchange resin, there are some useful methods such as one designed to pass the reaction solution through a column filled with a cation exchange resin and one designed to add a cation exchange resin to the reaction solution and stir them. When the latter method is adopted, the cation exchange resin is removed by filtration etc. after treatment.

For the production method for a silicone polymer according to the present invention, it is preferable to adopt a process in which a reaction solution containing at least one silane compound selected from the compounds represented by the general formula (1) and the compounds represented by the general formula (2), a quaternary ammonium compound, and water is brought into contact with a cation exchange resin by passing it through a tank filled with the cation exchange resin.

The quantity of the cation exchange resin is preferably 1.0 to 10.0 equivalents, more preferably 1.1 to 8.0 equivalents, and still more preferably 1.2 to 5.0 equivalents, relative to 1.0 equivalents of the quaternary ammonium compound in use. If the quantity of the cation exchange resin in use is 1.0 equivalents or more, it can serve to remove the quaternary ammonium compound, whereas if it is 10.0 equivalents or less, the resulting silicone polymer will be stable and it is also economically preferable because the consumption of the cation exchange resin will be small.

When the reaction solution is brought into contact with a cation exchange resin, its temperature is preferably 0°C to 60°C and more preferably 5°C to 50°C. If the temperature is 0°C or more, the quaternary ammonium compound will be removed sufficiently, whereas if it is 60°C or less, it is preferable because the resulting silicone polymer will be stable.

It is preferable for the reaction solution to be in contact with a cation exchange resin for a period of 5 minutes to 6 hours, more preferably 10 minutes to 3 hours. If it is in contact for 5 minutes or more, the quaternary ammonium compound can be removed sufficiently, whereas if it is 6 hours or less, it is preferable because the resulting silicone polymer will be stable.

For the production method for a silicone polymer according to the present invention, an alcohol having a boiling point of 100°C or less may be added when the silane compound selected from the compounds represented by the general formula (1) and the compounds represented by the general formula (2) is reacted. Examples of such an alcohol having a boiling point of 100°C or less include methanol, ethanol, n-propanol, and isopropanol. Of these, methanol is preferred because it can be evaporated easily. Two or more of such alcohols having boiling points of 100°C or less may be used together.

The quantity of the alcohol having a boiling point of 100°C or less is preferably 1.0 to 10 times by mass, more preferably 1.2 to 8 times by mass, and still more preferably 1.5 to 5 times by mass, that of the silane compound selected from the compounds represented by the general formula (1) and the compounds represented by the general formula (2). If the quantity of the alcohol having a boiling point of 100°C or less is 1.0 times by mass or more, the silane compound selected from the compounds represented by the general formula (1) and the compounds represented by the general formula (2) will be mixed easily with water and the gelation of the resulting silicone polymer will be suppressed to ensure higher stability. If the quantity of the alcohol having a boiling point of 100°C or less is 10 times by mass or less, it is economically preferable.

For the production method for a silicone polymer according to the present invention, another solvent may be added in addition to the alcohol having a boiling point of 100°C or less. Examples of such a solvent include aprotic solvents such as toluene and xylene, ketone based solvents such as methyl ethyl ketone and methyl isobutyl ketone, ether based solvents such as diethyl ether and tetrahydrofuran, and high boiling point solvents such as propylene glycol monomethyl ether, propylene glycol monomethyl ether acetate, diethylene glycol monomethyl ether, propylene glycol monoethyl ether, and ethyl lactate. Two or more of these solvents may be used together.

For the production method for a silicone polymer according to the present invention, it is preferable for the silicone polymer to have a weight average molecular weight of 300 to 100,000, more preferably 500 to 50,000, and still more preferably 1,000 to 20,000. If its weight average molecular weight is 300 or more, it can form a coat film, whereas if it is 100,000 or less, it is preferable because it will be soluble in organic solvents.

In addition, it is preferable that the polydispersity index (Mw/Mn), which is calculated by dividing the weight average molecular weight (Mw) by the number average molecular weight (Mn), be 1 to 20, more preferably 1 to 5.

For the present Description, the weight average molecular weight (Mw), number average molecular weight (Mn), and Z-average molecular weight (Mz) of a silicone polymer can be determined by taking measurements by gel permeation chromatography (GPC) and converting them in terms of a standard polystyrene.

For the production method for a silicone polymer according to the present invention, the resulting silicone polymer may have a cage type higher order structure.

A silicone polymer produced by the production method for a silicone polymer according to the present invention may be dissolved in a solvent. Examples of such a solvent include alcohol based solvents and high boiling point solvents. Examples of the alcohol based solvents include alcohol based solvents such as methanol, ethanol, and isopropanol, and examples of the high boiling point solvents include propylene glycol monomethyl ether, propylene glycol monomethyl ether acetate, propylene glycol monoethyl ether, propylene glycol monoethyl ether acetate, diethylene glycol monomethyl ether, and ethyl lactate.

A common technique to form a coat film of a silicone polymer produced by the production method for a silicone polymer according to the present invention is described below.

To form a coat film, a silicone polymer is applied to a substrate by spin coating to form a thin film and it is then heated. Useful materials for the substrate include, for example, glass, silicon wafer, and resins such as polyethylene, polypropylene, and polypropylene terephthalate.

The thin film formed on the substrate is then heated on a hot plate or in an incubator to remove the solvent while hydrolyzing and polycondesing the silicone polymer to produce a coat film.

In common film preparation processes, heating is performed preferably at 80°C or more, more preferably 100°C or more, to form a coat film.

A coat film thus produced is very high in hardness with a pencil hardness of 4H or higher and high in scratch resistance.

As described above, a silicone polymer produced by the production method for a silicone polymer according to the present invention can be processed easily to form a coat film and accordingly can be used suitably in the production of semiconductors, displays, etc.

### EXAMPLES

The present invention will be described in more detail below with reference to examples. In the examples and comparative examples given below, the instruments specified below were adopted and general type reagents available from reagent manufacturers were used as ingredient materials unless otherwise specified explicitly. The methods described below were used for analysis.

### • Molecular weight measurement

A HLC-8220GPC system manufactured by Tosoh Corporation was used, and TSKgel SuperHZ3000, TSKgel SuperHZ2000, and TSKgel SuperHZ1000, manufactured by Tosoh Corporation, were connected in series thereto to perform analysis. An RI (refractometer) was employed for detection and a TSKgel SuperH-RC column was adopted as reference column. A tetrahydrofuran product manufactured by Wako Pure Chemical Corporation was used as eluent and the flow rate was 0.35 mL/min in the column and the reference column. The measuring temperature was maintained at 40°C in both the plunger pump and the column. Samples were prepared according to a plan designed to dilute about 0.025 g of a silicone polymer with 10 mL of tetrahydrofuran and inject 25 µL thereof. For the molecular weight distribution calculation, a TSK standard polystyrene (A-500, A-1000, A-2500, A-5000, F-1, F-2, F-4, F-10, F-20, F-40, or F-80) manufactured by Tosoh Corporation was used as standard substance.

### • Solid content measurement

A 1.0 g portion of a solution containing a silicone polymer was weighed in an aluminum cup and burned at 175°C for 1 hour on a hot plate. Thus, the mass of the solid component in the 1.0 g portion of the solution containing a silicone polymer was determined and the solid content (mass%) in the solution containing a silicone polymer was calculated.

### • Scratch hardness measurement

The measurement was performed according to JIS K 5600-5-4 "Scratch hardness (pencil method)". Here, coat film samples were prepared by the procedure described below. A 1 ml portion of a solution containing a silicone polymer was dropped onto a silicon wafer, and a thin film was formed with a spin coater (1,000 rpm). The thin film formed was burned on a hot plate at 130°C for 90 seconds, placed on a hot plate at 250°C, covered with a metal lid, and burned for additional 1 hour, and the resulting coat film was subjected to scratch hardness test. The thickness of the coat film was measured using an optical interferometry film thickness measuring device (Lambda Ace, manufactured by SCREEN Semiconductor Solutions Co., Ltd.).

### Example 1

A 100 ml screw vial was charged with 2.45 g (0.018 mol) of methyl trimethoxysilane, 6.39 g (0.042 mol) of tetramethoxysilane, 26.52 g of methanol (3.0 times by mass that of the silane compound), and 4.42 g of ion exchanged water. In addition, a stirrer of a magnetic stirring device was added and stirring was performed. Then, 12.82 g (0.232 times by mole/alkoxy group) of a 50% aqueous solution of 2-hydroxyethyltrimethylammonium hydroxide was added dropwise. The amount of water added was equal to 2.72 times by mole/alkoxy group as large as the sum of the amount of ion exchanged water charged in advance and the amount of water contained in the 50% aqueous solution of 2-hydroxyethyltrimethylammonium hydroxide. After the end of dropping, the reaction liquid was aged at room temperature for 3 hours. Elsewhere, one end of a cylindrical column made of SUS304 with a diameter of 13.5 mm and a length of 200 mm was plugged with a sufficient amount of quartz wool to prevent the ion exchange resin from flowing out, and then the column was filled with a cation exchange resin (Amberlyst 15JWET, manufactured by Organo Corporation) previously substituted with methanol. Two columns were connected in series and 56 cm³ of a cation exchange resin was poured to fill them. The aged reaction solution was pumped by a plunger pump and supplied to the columns filled with an ion exchange resin at a rate of 28 cm³/h. After transferring the reaction solution completely, the reaction solution was pushed out of the columns by supplying methanol additionally. To the resulting reaction solution, the same amount of propylene glycol monoethyl ether was added, and the mixture was concentrated under reduced pressure to provide a colorless transparent liquid containing a silicone polymer. The resulting colorless transparent liquid had a solid content of 10.2 mass%. From the solid content, the yield of the silicone polymer was calculated at 78%. The silicone polymer had a weight average molecular weight (Mw) of 5,090 and a polydispersity index (Mw/Mn) of 3.89. Furthermore, the coat film had a scratch hardness of 6H.

### Example 2

A 100 ml screw vial was charged with 5.18 g (0.038 mol) of methyl trimethoxysilane, 8.68 g (0.057 mol) of tetramethoxysilane, and 41.55 g of methanol (3.0 times by mass that of the silane compound). In addition, a stirrer of a magnetic stirring device was added and stirring was performed. Then, 12.24 g (0.144 times by mole/alkoxy group) of a 50% aqueous solution of 2-hydroxyethyltrimethylammonium hydroxide was added dropwise. Accordingly, the amount of water fed was 1.02 times by mole/alkoxy group. After the end of dropping, the reaction liquid was aged at room temperature for 3 hours. Elsewhere, one end of a cylindrical column made of SUS304 with a diameter of 13.5 mm and a length of 20 mm was plugged with a sufficient amount of quartz wool to prevent the ion exchange resin from flowing out, and then the column was filled with a cation exchange resin (Amberlyst 15JWET, manufactured by Organo Corporation) previously substituted with methanol. Two columns were connected in series and 56 cm³ of a cation exchange resin was poured to fill them. The aged reaction solution was pumped by a plunger pump and supplied to the columns filled with an ion exchange resin at a rate of 28 cm³/h. After transferring the reaction solution completely, the reaction solution was pushed out of the columns by supplying methanol additionally. To the resulting reaction solution, the same amount of propylene glycol monoethyl ether was added, and the mixture was concentrated under reduced pressure to provide a colorless transparent liquid containing a silicone polymer. The resulting colorless transparent liquid had a solid content of 17.9 mass%. From the solid content, the yield of the silicone polymer was calculated at 76%. The silicone polymer had a weight average molecular weight (Mw) of 4,660 and a polydispersity index (Mw/Mn) of 2.22. Furthermore, the coat film had a scratch hardness of 6H.

### Example 3

A silicone polymer was synthesized in the same way as in Example 2 except for using 6.42 g (0.047 mol) of methyl trimethoxysilane, 7.29 g (0.047 mol) of tetramethoxysilane, 27.42 g of methanol (2.0 times by mass that of the silane compound), and 11.91 g (0.144 times by mole/alkoxy group) of a 50% aqueous solution of 2-hydroxyethyltrimethylammonium hydroxide instead of 5.18 g (0.038 mol) of methyl trimethoxysilane, 8.68 g (0.057 mol) of tetramethoxysilane, 41.55 g of methanol (3.0 times by mass that of the silane compound), and 12.24 g (0.144 times by mole/alkoxy group) of a 50% aqueous solution of 2-hydroxyethyltrimethylammonium hydroxide, thus providing a colorless transparent viscous liquid containing a silicone polymer. The resulting colorless transparent viscous liquid had a solid content of 15.6 mass%. From the solid content, the yield of the silicone polymer was calculated at 82%. The silicone polymer had a weight average molecular weight (Mw) of 3,600 and a polydispersity index (Mw/Mn) of 2.00. Furthermore, the coat film had a scratch hardness of 6H.

### Comparative example 1

A 100 ml screw vial was charged with 2.45 g (0.018 mol) of methyl trimethoxysilane, 6.39 g (0.042 mol) of tetramethoxysilane, 26.52 g of methanol (3.0 times by mass that of the silane compound), and 4.42 g of ion exchanged water. In addition, a stirrer of a magnetic stirring device was added and stirring was performed. Then, 12.82 g (0.232 times by mole/alkoxy group) of a 50% aqueous solution of 2-hydroxyethyltrimethylammonium hydroxide was added dropwise. The amount of water added was equal to 2.72 times by mole/alkoxy group as large as the sum of the amount of ion exchanged water charged in advance and the amount of water contained in the 50% aqueous solution of 2-hydroxyethyltrimethylammonium hydroxide. After the end of dropping, the reaction liquid was aged at room temperature for 3 hours. Elsewhere, a 200 ml screw vial was charged with 7.17 g of maleic acid, 13.26 g of ion exchanged water, and 88.40 g of ethyl acetate, and they were stirred by a magnetic stirrer. The aged reaction solution was added dropwise to the reaction solution to neutralize the 2-hydroxyethyltrimethylammonium hydroxide which was contained as catalyst. However, even when a 10-fold by mass of ethyl acetate was added to the silicone polymer, the reaction solution remained uniform, resulting in a failure in causing liquid separation. Thus, it was impossible to neutralize it to obtain the silicone polymer in a salt-free state.

### Comparative example 2

A test run was performed in the same way as in Comparative example 1 except for using 4.42 g of methanol (0.5 times by mass/silane compound) instead of 26.52 g of methanol (3.0 times by mass the amount of the silane compound), but gelation of the polymer occurred, resulting in a failure in obtaining a silicone polymer soluble in the organic solvent.

### Comparative example 3

A test run was performed in the same way as in Example 1 except for omitting the dropwise addition of 12.82 g (0.232 times by mole/alkoxy group) of a 50% aqueous solution of 2-hydroxyethyltrimethylammonium hydroxide, which means that the ion exchanged water added in advance (1.12 times by mole/alkoxy group) was the only water component, but the weight average molecular weight (Mw) of the silicone polymer obtained was 530, which means that it was impossible to produce a silicone polymer polymerized to a sufficient degree to form a coat film.

**[Table 1]**

| | Synthesis conditions | | | | | | Evaluation results | | | |
|---|---|---|---|---|---|---|---|---|---|---|
| | silane compound | | quaternary ammonium compound | water | methanol | cation exchange resin | molecular weight | solid content | yield | pencil hardness |
| | silane compound of Equation 1 | silane compound of Equation 2 | | | | | | | | |
| | (mol%) | (mol%) | | (times by mole /alkoxy group) | (times by mass /silane compound) | | (Mw) | (mass%) | (%) | (-) |
| Example 1 | 30 | 70 | 50% aqueous solution of 2-hydroxyethyl trimethylammonium hydroxide | 2.72 | 3.0 | Amberlyst 15JWET | 5090 | 10.2 | 78 | 6H |
| Example 2 | 40 | 60 | 50% aqueous solution of 2-hydroxyethyl trimethylammonium hydroxide | 1.02 | 3.0 | Amberlyst 15JWET | 4660 | 17.9 | 76 | 6H |
| Example 3 | 50 | 50 | 50% aqueous solution of 2-hydroxyethyl trimethylammonium hydroxide | 1.02 | 2.0 | Amberlyst 15JWET | 3600 | 15.6 | 82 | 6H |
| Comparative example 1 | 30 | 70 | 50% aqueous solution of 2-hydroxyethyl trimethylammonium hydroxide | 2.72 | 3.0 | | silicone polymer not formed due to nonoccurrence of liquid separation | | | |
| Comparative example 2 | 30 | 70 | 50% aqueous solution of 2-hydroxyethyl trimethylammonium hydroxide | 2.72 | 0.5 | - | silicone polymer not formed due to gelation during neutralization | | | |
| Comparative example 3 | 30 | 70 | - | 1.12 | 3.0 | Amberlyst 15JWET | silicone polymer not formed due to insufficient degree of polymerization for coat film formation | | | |

## Claims

1. A production method for a silicone polymer comprising a step for preparing at least one silane compound selected from the compounds represented by the general formula (1) given below
RₐSi(OR¹)₄₋ₐ (1)
(wherein R is a hydrogen atom or monovalent organic group; R¹ is a monovalent organic group; and a is an integer of 1 or 2)
and the compounds represented by the general formula (2) given below
Si(OR²)₄ (2)
(wherein R² is a monovalent organic group),
a step for hydrolyzing it with a quaternary ammonium compound in the presence of water, and a step for bringing it into contact with a cation exchange resin.

2. A production method for a silicone polymer as set forth in claim 1, wherein a reaction solution containing at least one silane compound selected from the compounds represented by the general formula (1) and the compounds represented by the general formula (2), a quaternary ammonium compound, and water is brought into contact with a cation exchange resin by passing it through a tank filled with the cation exchange resin.

3. A production method for a silicone polymer as set forth in either claim 1 or 2, wherein the compound represented by the general formula (2) accounts for 50 to 100 mol% relative to the total quantity, which accounts for 100 mol%, of the at least one silane compound selected from the compounds represented by the general formula (1) and the compounds represented by the general formula (2).

4. A production method for a silicone polymer as set forth in any one of claims 1 to 3, wherein the quaternary ammonium compound in use accounts for 0.002 to 2 moles relative to the total quantity, i.e. 1 mole, of the alkoxyl group contained in the at least one silane compound selected from the compounds represented by the general formula (1) and the compounds represented by the general formula (2).

5. A production method for a silicone polymer as set forth in any one of claims 1 to 4, wherein the quaternary ammonium compound is a quaternary ammonium compound containing a hydroxyl group.

6. A production method for a silicone polymer as set forth in claim 5, wherein the quaternary ammonium compound containing a hydroxyl group is 2-hydroxyethyltrimethylammonium hydroxide, dimethyl bis(2-hydroxyethyl)ammonium hydroxide, or tris-(2-hydroxyethyl)methylammonium hydroxide.

7. A production method for a silicone polymer as set forth in any one of claims 1 to 6, wherein the cation exchange resin is a strong acid cation exchange resin.

8. A production method for a silicone polymer as set forth in any one of claims 1 to 7, wherein the quantity of the cation exchange resin is 1.0 to 10.0 equivalents relative to 1.0 equivalents of the quaternary ammonium compound.

9. A production method for a silicone polymer as set forth in any one of claims 1 to 8, wherein the at least one silane compound selected from the compounds represented by the general formula (1) and the compounds represented by the general formula (2) is hydrolyzed in the presence of an alcohol having a boiling point of 100°C or less.

10. A production method for a silicone polymer as set forth in claim 9, wherein the quantity of the alcohol having a boiling point of 100°C or less is 1.0 to 10 times by mass that of the at least one silane compound selected from the compounds represented by the general formula (1) and the compounds represented by the general formula (2).

11. A production method for a film comprising a step for applying a silicone polymer produced by a production method as set forth in any one of claims 1 to 10 to a substrate and a step for heating it.

12. A film having a pencil hardness of 4H or higher produced by a production method for a film as set forth in claim 11.
